(19) Europäisches Patentamt

European Patent Office

Office européen des brevets

(11) Veröffentlichungsnummer: **0 331 794**

**A2**

(12) **EUROPÄISCHE PATENTANMELDUNG**

(21) Anmeldenummer: **88117873.5**

(22) Anmeldetag: **27.10.88**

(51) Int. Cl.⁴: **B23K 26/00**

(30) Priorität: **08.03.88 DE 3807476**

(43) Veröffentlichungstag der Anmeldung:
**13.09.89 Patentblatt 89/37**

(84) Benannte Vertragsstaaten:
**AT BE CH DE FR GB IT LI NL SE**

(71) Anmelder: **Messerschmitt-Bölkow-Blohm
Gesellschaft mit beschränkter Haftung
Robert-Koch-Strasse
D-8012 Ottobrunn(DE)**

(72) Erfinder: **Handke, Günther
Loiderdinger Strasse 18
D-8167 Irschenberg(DE)**
Erfinder: **Lemke, Hans-Jürgen
Eichenstrasse 40
D-8014 Neubiberg(DE)**

(54) **Bearbeitungseinrichtung für Werkstücke.**

(57) Die Erfindung betrifft eine Bearbeitungseinrichtung für laserschweißbare und lasertrennbare Werkstücke, die für deren Vor- und Nachbearbeitung mit mehreren Bearbeitungsvorrichtungen versehen ist.

FIG. 1

EP 0 331 794 A2

## Bearbeitungseinrichtung für Werkstücke

Die Erfindung betrifft eine Bearbeitungseinrichtung für Werkstücke, die für Schweiß- und Trennarbeiten mit einem Laserkopf versehen ist.

Derartige Einrichtungen sind teilweise aus der von der Anmelderin unter dem Aktenzeichen P 37 27 904.1-34 angemeldeten Einrichtung bekannt geworden. Hierbei handelt es sich ebenfalls um eine Laserstrahleinrichtung zum Schweißen und Trennen von Werkstücken, wie z.B. von Blechen, deren Abstand untereinander sowie zum Laserkopf mittels einer Druckrolle für einen gleichbleibenden Laserwirkungsgrad am Werkstück und somit für eine stetig hohe Bearbeitungsqualität gesteuert wird.

Bei dieser Einrichtung wird jedoch die Oberflächenbeschaffenheit der zu bearbeitenden Bleche nicht berücksichtigt, obwohl diese für die Schweiß- und Trennqualität beim Laserverfahren gleichfalls ausschlaggebend ist, da der Reflexions- und Dispersionsgrad der Oberfläche sich hier entscheidend auswirkt.

Außerdem behindert eine Oberflächenschicht - sei es in Form von Schmutz, von Oxyden oder von beispielsweise einer Schutzbeschichtung von metallischer oder nichtmetallischer Konsistenz - den Wärmefluß vom Laserstrahl zur Bearbeitungsstelle mit entsprechend negativen Auswirkungen.

Zudem müssen die bei der Laserstrahlbearbeitung entstehenden Spritzer sowohl von der mit dem Laserstrahl zu bearbeitenden Stelle ferngehalten als auch für eine Weiterverarbeitung oder Weiterverwendung des Werkstückes von dessen Oberfläche entfernt werden. Das bedeutet, daß vor und nach der Laserbearbeitung des Werkstückes für dieses noch mehrere Arbeitsgänge auf verschiedenen Maschinen erforderlich sind.

Dies ist einerseits sehr kostspielig und andererseits läßt dies wieder eine erneute Schmutzablagerung, aber insbesondere eine neue Oxydbildung auf der für eine einwandfreie Laserbearbeitung und Neubeschichtung sehr empfindlichen Oberfläche des Werkstückes zu.

Der Erfindung liegt daher die Aufgabe zugrunde, unter Vermeidung der vorgenannten Nachteile eine gattungsgemäße Laser-Bearbeitungseinrichtung derart zu verbessern, daß hiermit automatisch sowohl eine lasergerechte Oberflächenqualität für eine hohe Schweiß- und Trenngüte an beschichteten und unbeschichteten Werkstücken als auch eine einwandfreie Oberfläche für eine andere Weiterbearbeitung des Werkstückes erzielbar ist.

Diese Aufgabe wird durch die im Anspruch 1 aufgezeigten kennzeichnenden Merkmale gelöst. Vorteilhafte Weiterbildungen sind aus den Unteransprüchen ersichtlich.

Die Vorteile der Erfindung liegen insbesondere darin begründet, daß auf sehr kostengünstige Weise die Werkstücke in einem Arbeitsgang automatisch entschichtet und/oder gereinigt, anschließend geschweißt oder getrennt und sofort wieder beschichtet werden können, wobei die Arbeitsgänge in verschiedener Reihenfolge durchführbar sind.

Außerdem ist über eine Vorschubsteuerung für die Werkstücke und/oder des Laserkopfes bzw. der Bearbeitungseinrichtung jeder Arbeitsgang entsprechend den Qualitätsanforderungen mittels des mit den Sensoren korrespondierenden Steuer- bzw. Regelgerätes automatisch steuer- bzw. regelbar sowie korrigierbar. Die Steuerung bzw. Regelung bezieht sich ebenfalls auf die Arbeitsweise der einzelnen Arbeitsvorrichtungen, wie die thermischen Einrichtungen, der Reinigungsvorrichtung und die Blas- oder Absaugvorrichtung, deren Wirkungsgrad damit derart automatisch einstellbar ist, daß stets eine rasche jedoch hochwertige Laserschweißung oder Lasertrennung sowie eine hochqualitative Neubeschichtung der Werkstücke gewährleistet ist.

Die Erfindung wird nachfolgend anhand eines Ausführungsbeispieles beschrieben und in der Zeichnung dargestellt. es zeigen

Fig. 1 eine schematische Darstellung der Bearbeitungseinrichtung in der Grundausführung,

Fig. 2 eine erweiterte Ausführung der Bearbeitungseinrichtung nach Fig. 1.

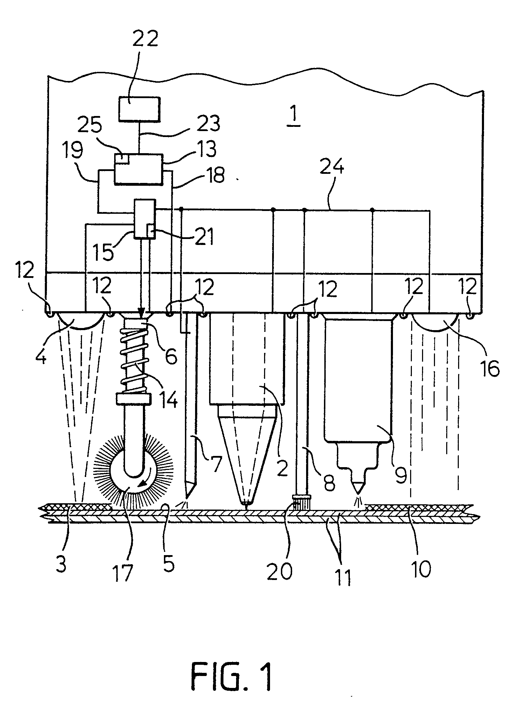

Aus der Fig. 1 geht die Bearbeitungseinrichtung 1 hervor, an der in der Grundausführung die Bearbeitungsvorrichtungen 4, 6, 7, 2, 8, 9 und 16 angeordnet sind.

Im Vorlauf zum Laserkopf 2 ist hiervon eine bekannte schwenkbare und z.B. fokussierbare thermische Einrichtung 4 vorgesehen, die je nach Bedarf aus einem Infrarotstrahler, einem Laserkopf oder einer Kalt- bzw. Heißgasdüse oder aus einer sonstigen Heizanlage bestehen kann. Diese nur als Strahler dargestellte thermische Einrichtung 4, dient zur Aufweichung - bzw. bei dem sehr kalten Gas zur Versprödung - der Beschichtung 3, um deren anschließende Beseitigung zu ermöglichen oder um eine chemisch reine Oberfläche 5 am Werkstück 11 zu erzielen.

Nachfolgend zur thermischen Einrichtung 4 ist eine mechanische Reinigungsvorrichtung 6 an der Bearbeitungseinrichtung 1 mit der Aufgabe angeordnet, für die Beseitigung der Beschichtung 3 oder von Verschmutzungen aller Art von der Oberfläche 5, ggf. bis zu deren Polierung, zu sorgen. Für unterschiedliche Zwecke kann die Reinigungsvorrichtung 6 jeweils einzeln oder in Kombination mit Arbeitsgeräten, wie einer stationären oder bewegbaren Bürste 17, einer Schleifscheibe, einem Stichel, einem schwenkbaren Kugel- oder Sandstrahler oder mit einem schwenkbaren Dampf- bzw. Flüssigkeitsstrahler ausgerüstet werden.

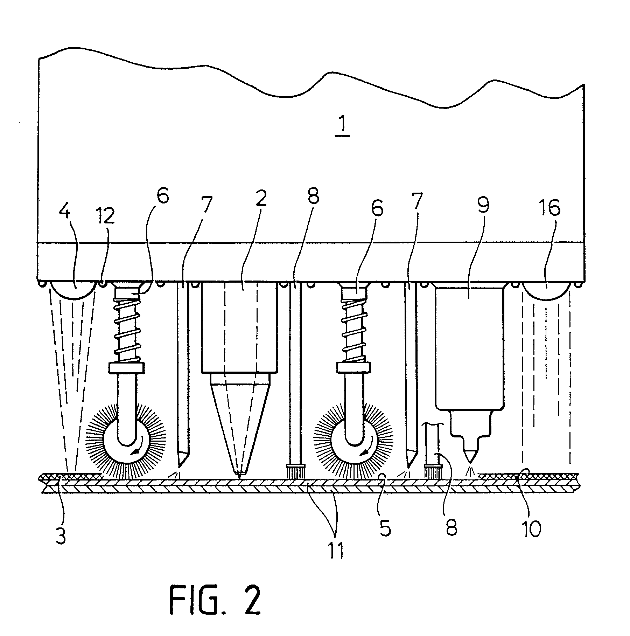

Aus Vereinfachungsgründen ist die Reinigungsvorrichtung 6 in der Fig. 1 und 2 jedoch nur als eine mit einer bewegbaren Bürste 17 versehene Vorrichtung dargestellt.

Der Arbeitsdruck für die Reinigung, z.B. für die Bürste 17 kann im einfachen Fall mittels einer an der Reinigungsvorrichtung 6 auswechselbar angeordneten Feder 14 bzw. automatisch mittels einer später noch zu beschreibenden Leistungseinrichtung 15 auf die jeweils spezifischen Anforderungen abgestellt werden.

Die Bewegung bzw. die Drehbewegung der der Reinigungsvorrichtung 6 zugeordneten Arbeitsgeräten, wie z.B. die der Bürste 17, wird mittels eines bekannten elektrischen oder pneumatische Antriebes 21 in nicht näher dargestellter Weise bewerkstelligt, wobei auf dessen Steuerung jedoch später noch genauer eingegangen wird.

Der Reinigungsvorrichtung 6 ist eine Blas- und Absaugvorrichtung 7 nachgeordnet, die aus einem mit einer gerichteten Düse versehenem Rohr besteht, jedoch z.B. auch aus einem Schlauch bestehen kann, und in nicht dargestellter Weise mit einer Gasquelle oder einer nicht dargestellten Pumpe und ggf. mit einem Behälter in Verbindung steht. Dieser Blas- oder Absaugvorrichtung 7 obliegt die Beseitigung (durch Wegblasen oder Absaugen in den Behälter) jeglicher Art von Partikeln, die vom vorausgehenden Reinigungsvorgang auf der Oberfläche 5 des Werkstückes 11 verblieben sind. Zusätzlich wird hierdurch die Materialabführung von der Reinigungsstelle begünstigt.

Die mittels der Bearbeitungsvorrichtungen 4, 6 und 7 nun derart vorbehandelte Oberfläche 5 des Werkstückes 11 ist damit für eine hochqualitative Laserbearbeitung durch den Laserkopf 2 vorbereitet.

Zur Vermeidung einer Vermischung der bei der Laserbearbeitung entstehenden Spritzer mit dem Beschichtungsmaterial oder mit der anschließend neu zu bildenden Beschichtungsschicht 10, ist dem Laserkopf 2 eine druckbetätigbare Abdeckvorrichtung 8 nachgefügt, die an ihrem werkstücknahen Ende mit einer weiteren Bürste 20 für eine vollständige Abdeckung versehen ist.

Anschließend ist an der Bearbeitungseinrichtung 1 eine bekannte Werkstückbeschichtungseinrichtung 9 zur sofortigen Neubeschichtung (Beschichtung 10) des Werkstückes 11 angeordnet, da hierdurch eine Neubildung von Oxyden wirkungsvoll verhindert wird.

Für eine sofortige Behandlung, d.h. Aushärtung der Beschichtung 10, ist im Anschluß eine z.B. fokussier- und schwenkbare weitere thermische Einrichtung 16 vorgesehen, die wie die vorgenannte thermische Einrichtung 4, als ein Infrarotstrahler, als ein Laserkopf oder als eine Kalt- oder Heißgasdüse oder als sonstige Heizanlage ausgebildet sein kann.

Für die Steuerung bzw. Regelung der Arbeitsgänge, d.h. der einzelnen oder gesamten Arbeitsleistung der Bearbeitungsvorrichtungen 4, 6, 7, 2, 8, 9, 16 sowie des Vorschubes der Werkstücke 11 und/oder der Bearbeitungseinrichtung 1, ist an dieser ein bekanntes und daher nicht beschriebenes Steuer- bzw. Regelgerät 13 vorgesehen, das über eine Leitung 19 mit einer ebenfalls bekannten elektrischen, pneumatischen oder hydraulischen Leistungseinrichtung 15 in Verbindung steht.

Mittels der somit gesteuerten bzw. - je nach aufwendiger Anforderung -geregelten Leistungseinrichtung 15 wird nun über die Verbindung 24 eine gesteuerte bzw. geregelte Leistungsabgabe in Form von z.B. Strahlungswärme, Bürstendruck oder Blasdruck etc. auf die Bearbeitungsvorrichtungen 4, 6, 7, 2, 8, 9, 16 und/oder auf den genannten Vorschub bewerkstelligt.

Der elektrische oder pneumatische Antrieb 21 für die Bewegung oder Drehbewegung der der Reinigungsvorrichtung 6 z.B. zugeordneten Bürste 17, wird für die unterschiedlichen Reinigungsanforderungen ebenfalls mittels des Steuer- bzw. Regelgerätes 13 gesteuert bzw. geregelt.

Im Normalfall werden grundsätzlich die erforderlichen Leistungsdaten entsprechend der Werkstückart und dessen Zustand entweder über einen Speicher 22 mit der Leitung 23 und einem Rechner 25, wobei im ersteren die Werte für alle typischen Werkstücke und Zustände gespeichert sind, oder direkt in das Steuer- bzw. Regelgerät 13 eingegeben. Hierdurch kann automatisch eine Steuerung bzw. Regelung der Arbeitsgänge, die durch die Bearbeitungsvorrichtungen 4, 6, 7, 2, 8, 9, 16 und/oder durch den Bearbeitungsvorschub ausgeführt werden, erfolgen.

Zur Kontrolle der einzelnen Arbeitsgänge sind zwischen bzw. nach den einzelnen Bearbeitungsvorrichtungen 4, 6, 7, 2, 8, 9, 16 Sensoren 12 an der Bearbeitungseinrichtung 1 vorgesehen, die über eine Leitung 18 (nur einmal dargestellt) mit dem Steuer- bzw. Regelgerät 13 korrespondieren.

Der Rechner 25 im Steuer- bzw. Regelgerät 13 vergleicht nun laufend die von den Sensoren aufgenommenen Istwerte mit den Sollwerten im Speicher 22 und aktiviert entsprechend das Steuer- bzw. Regelgerät 13. Dessen Steuerung bzw. Regelung der einzelnen oder gesamten Arbeitsleistung der Bearbeitungsvorrichtungen 4, 6, 7, 2, 8, 9, 16 ist insbesondere dann von großer Wichtigkeit, wenn während des Bearbeitungsprozesses von den Sensoren 12 eine unzureichende Bearbeitungsqualität, wie z.B. verbleibende Beschichtungsreste auf der Oberfläche 5 des Werkstückes 11 mit einer daraus resultierenden mangelnden Leistung des Laserkopfes 2 etc. festgestellt wird. In diesem Falle ist die Arbeitsleistung sofort automatisch korrigierbar, so daß z.B. bei einer Schweißung zweier Bleche oder deren Trennung mit anschließender Neubeschichtung stets eine hohe Qualität, selbst bei einer Serienfertigung, aufrecht erhalten werden kann.

Nachfolgend zu der nach der Fig. 1 beschriebenen Grundausführung der Bearbeitungseinrichtung 1, ist in der Fig. 2 eine erweiterte und gleichfalls steuer- bzw. regelbare Ausführung dargestellt.

Bei dieser Einrichtung sind im Vorlauf zum Laserkopf 2 die gleichen Bearbeitungsvorrichtungen 4, 6, und 7 wie in Fig. 1 vorgesehen, jedoch sind hier außer der Abdeckvorrichtung 8 zusätzlich die Reinigungsvorrichtung 6 und die Blas- oder Absaugvorrichtung 7 dem Laserkopf 2 nachgeschaltet, wobei sich daran auch noch direkt die Abdeckvorrichtung 8 vor der Werkstückbeschichtungseinrichtung 9 und der weiteren thermischen Einrichtung 16 anschließen kann.

Das bedeuetet, daß mit dieser Einrichtung bei besonderer Verschmutzung durch die vom Laserstrahl erzeugten Spritzer auf der Oberfläche 5 oder für hochempfindlichen Beschichtungsverfahren eine weitere Reinigung und Abdeckung der Oberfläche 5 vor der Bildung einer neuen Beschichtung 10 durch die Werkstückbeschichtungseinrichtung 9 erfolgen kann.

Es ist auch denkbar, daß in nicht dargestellter Weise nur einzelne Vorrichtungen aus der Reihe der Bearbeitungsvorrichtungen 4, 6, 7, 2, 8, 9, 16 in einer anderen Reihenfolge an der Bearbeitungseinrichtung vorgesehen sind, wobei deren Anordnung nur im Vorlauf und/oder auch im Nachlauf zum Laserkopf 2 vornehmbar ist.

## Ansprüche

1. Bearbeitungseinrichtung für Werkstücke, die für Schweiß- und Trennarbeiten mit einem Laserkopf versehen ist, **dadurch gekennzeichnet,** daß die Bearbeitungseinrichtung (1) zur automatischen Vor- und Nachbearbeitung von Werkstücken (11) mit mehreren steuer- bzw. regelbaren Bearbeitungsvorrichtungen versehen ist, von denen eine auf die Werkstückbeschichtung (3) einwirkbare thermische Einrichtung (4), eine mechanisch mit der Werkstückoberfläche (5) korrespondierende Reinigungsvorrichtung (6) sowie eine Blas- oder Absaugvorrichtung (7) im Vorlauf zu einem Laserkopf (2) vorgesehen ist und von denen eine Abdeckvorrichtung (8), eine Werkstückbeschichtungseinrichtung (9) und eine weitere thermische Einrichtung (16) zum Behandeln einer Beschichtung (10) im Nachlauf zum Laserkopf (2) angeordnet ist.

2. Bearbeitungseinrichtung nach Anspruch 1, **dadurch gekennzeichnet,** daß an der Bearbeitungseinrichtung (1) im Nachlauf zum Laserkopf (2) eine Abdeckvorrichtung (8), eine Reinigungsvorrichtung (6), eine Blas- oder Absaugvorrichtung (7) sowie bei Bedarf nochmals eine Abdeckvorrichtung (8) vorgesehen ist, an die sich eine Werkstückbeschichtungseinrichtung (9) und eine weitere thermische Einrichtung (16) anschließt.

3. Bearbeitungseinrichtung nach den Ansprüchen 1 und 2, **dadurch gekennzeichnet,** daß die fokussier- und schwenkbaren thermischen Einrichtungen (4, 16) als ein Infrarotstrahler, als eine Kalt- oder Heißgasdüse, oder als ein Laserkopf ausgebildet sind.

4. Bearbeitungsvorrichtung nach den Ansprüchen 1 und 2, **dadurch gekennzeichnet,** daß die Reinigungsvorrichtung (6) einzeln oder in Kombination mit einer stationären oder bewegbaren Bürste (17) einer Schleifscheibe, einem Stichel, einem schwenkbaren Sand- oder Kugelstrahler oder einem Dampf- oder Flüssigkeitsstrahler versehen ist.

5. Bearbeitungseinrichtung nach den Ansprüchen 1 und 2, **dadurch gekennzeichnet,** daß die Blas- oder Absaugvorrichtung (7) sich aus einem schwenkbaren, mit einer Düse versehenem Rohr oder Schlauch zusammensetzt, das bzw. der mit einer Gasquelle oder mit einer Pumpe und mit einem Behälter in Verbindung steht.

6. Bearbeitungseinrichtung nach einem oder mehreren der vorhergehenden Ansprüche 1 bis 5, **dadurch gekennzeichnet,** daß an der Bearbeitungseinrichtung (1) ein elektronisches/elektrisches Steuer- bzw. Regelgerät (13) zur Steuerung bzw. Regelung der einzelnen Arbeitsgänge über die Bearbeitungsvorrichtungen (4, 6, 7, 2, 8, 16) vorgesehen ist.

7. Bearbeitungseinrichtung nach einem oder mehreren der vorhergehenden Ansprüche 1 bis 6, **dadurch gekennzeichnet,** daß für die Betätigung der Bearbeitungsvorrichtungen (4, 6, 7, 2, 8, 9, 16) und des Vorschubes für die Werkstücke (11) und/oder für die Bearbeitungseinrichtung (1) an dieser eine elektrische, pneumatische oder hydraulische Leistungsvorrichtung (15) angeordnet ist, die mittels des Steuer- bzw. Regelgeräts (13) steuer bzw. regelbar ist.

8. Bearbeitungseinrichtung nach einem oder mehreren der vorhergehenden Ansprüche 1 bis 7, **dadurch gekennzeichnet,** daß der Reinigungsvorrichtung (6) ein elektrischer oder pneumatischer Antrieb (21) zugeordnet ist, der für einen gesteuerten bzw. geregelten Antrieb, z.B. für die Bürste (17), mit dem Steuer- bzw. Regelgerät (13) verbunden ist.

9. Bearbeitungseinrichtung nach einem oder mehreren der vorhergehenden Ansprüche 1 bis 8, **dadurch gekennzeichnet,** daß der Arbeitsdruck für die Reinigungseinrichtung (6) mittels einer an dieser auswechselbar angeordneten Feder (14) erzeugbar ist.

10. Bearbeitungseinrichtung nach einem oder mehreren der vorhergehenden Ansprüche 1 bis 9, **dadurch gekennzeichnet,** daß an der Bearbeitungseinrichtung (1) zwischen bzw. nach den Bearbeitungsvorrichtungen 4, 6, 7, 2, 8, 9, 16) Sensoren (12) vorgesehen sind, die zur Kontrolle der Arbeitsgänge mit dem Steuer- bzw. Regelgerät (13) korrespondieren.

11. Bearbeitungseinrichtung nach einem oder mehreren der vorhergehenden Ansprüche 1 bis 10, **dadurch gekennzeichnet,** daß dem Steuer-bzw. Regelgerät (13) ein Speicher (22) und ein Rechner (25) zugeordnet ist, in dem die gespeicherten Bearbeitungswerte für die Bearbeitungsvorrichtungen (4, 6, 7, 2, 8, 9, 16) und für den Vorschub verarbeitbar sind.

FIG. 1

FIG. 2

10 438